# EUROPEAN PATENT APPLICATION

(11) **EP 1 113 379 A2**
(43) Date of publication of application: **04.07.2001**
(21) Application number: 00311467.5
(22) Date of filing: 20.12.2000
(51) Int. Cl.: G06F 17/60, G06F 3/147

(54) **Information display system**

(30) Priority: 29.12.1999 US 473666; 29.12.1999 US 473617
(71) Applicant: Marconi Commerce Systems Inc., Greensboro, North Carolina 27420-2067 (US)
(72) Inventor: Marion, Kenneth O., Guilford, North Carolina 27410 (US)
(74) Representative: Fitchett, Stuart Paul

(57) **Abstract**

An information display system (100) for a retail store provides individualised pricing or advertising information to customers in response to receiving identifying customer information. The system may be used in conjunction with loyalty programs and includes information display units (112), associated customer information input devices (110), and a control system (130) for co-ordinating the operation of the information display units (112) and the information input devices (110). Each information display unit (112) and its associated information input device (110) is mounted proximate to a given product or display area. In response to receiving customer information individualised pricing or advertising is displayed on the information display units (112) associated with the customer information input device, The system includes customer-carried devices, either transmitters or information cards for transferring individual customer information to the customer information input devices. The system further includes shopping carts (240) adapted to receive individual customer information from either the customer-carried transmitters (220) or information cards, and to subsequently transfer this information to the customer information input devices.

## Description

The present invention relates to pricing systems primarily for retail stores and specifically relates to providing product pricing and advertising information specific to an individual.

Retail stores compete for customers based on price, service, and selection. With normally very narrow profit margins, stores compete aggressively with one another to attract and maintain a loyal base of regular customers. Because of the narrow profit margins, sales volume is key to acceptable earnings in the retail space. As such, stores have an incentive to offer common pricing and services in the interest of simplifying sales to a large number of customers. Yet such common pricing and service can be a disadvantage in the sense that it runs counter to a given retail store being able to differentiate itself from competitors.

A retail store, or chain of stores, benefits from having a reliable and preferably growing base of repeat customers. Stores commonly administer some form of a customer loyalty program intended to foster repeat business. In such programs, stores reward regular or repeat customers with price discounts and promotional offers not available to the general shopping public. Typical store loyalty programs require a customer to submit some form of an application or registration to gain membership in the program. Once registered, the member customer becomes eligible for the various price discounts and promotional items offered by the store.

Present store loyalty programs are fairly basic, defining a given customer as belonging to one of two categories, member or non-member, with the former eligible for loyalty program discounts and the latter ineligible. The simplicity of current store loyalty programs limits the effectiveness of such programs in maintaining and attracting a loyal base of repeat customer.

Substantially increasing the sophistication and attractiveness of customer loyalty programs requires tailoring the in-store shopping experience to an individual customer. Individualising the shopping experience includes providing customer-specific pricing, product information and advertising in and around the various product display areas, as well as automatically applying those customer-specific pricing discounts and product promotions at checkout. Of course, individualising the shopping experience must not impose any additional complexity on the individual member and non-member customers. Despite the attractiveness of individually tailoring the in-store shopping experience, stores face significant challenges in implementing systems supporting such individualised shopping experiences.

Retail stores typically arrange their goods and products on long rows of shelves arranged in aisles, providing convenient access to these goods and products for customers moving up and down the various aisles. Generally, plastic or paper placards mounted proximate to a given brand of product provide browsing customers with pricing and other relevant product information. Very often, these placards are disposed on the leading edges of the various shelves so that their position is roughly in front of or under the specific product pertaining to their printed information. Such placement allows a customer to easily determine the correspondence between printed pricing information and the product. While straightforward, this placard-based pricing system has several shortcomings.

One shortcoming is the inability to change displayed product information with minimal labour or time expense. With printed placards, changing the price for a displayed product entails printing a new price placard and installing it in place of the old placard. Stores often vary the discounts and promotions available to member customers week-to-week or even day-to-day. This variation in discounted product selections requires stores to maintain an ever-changing set of pricing and promotional displays.

Stores usually display pricing and product information for general customers and supplement this information with discount or promotional information pertaining only to loyalty program member customers. Such practices permit browsing customers to see both regular and discounted pricing information but displaying incentive pricing in this way has several disadvantages. Displaying multiple prices for a single product or service invariably confuses customers as to which price they will pay at the register. Often general customers assume the discount price applies to them, not realising the price only applies to customers who are loyalty program members. Further, the opportunities to recognise various levels of price discounts based on loyalty program membership level are severely limited with printed placard price displays.

Additionally, checkout systems are not equipped to individually identify customers for the purpose of applying related loyalty program membership discounts on an individualised basis. Currently, store loyalty program discounts are applied by the checkout system in a binary fashion, member customers all receive a single common discount for one or more given products and non-member customers receive no discount at all. Significant opportunities to enhance the attractiveness of a store's loyalty program are lost through such simplistic application of membership benefits.

Accordingly, there remains a need for a system that permits a store to individualise the shopping experience and maintain a sophisticated customer loyalty program tailored to individual customers or specific groups of customers. Ideally, such a system would provide for the automatic identification of an individual customer so that individualised pricing and checkout services could be provided to each customer as they browse the product display areas and, ultimately, conduct their purchase transactions at the checkout register. The present invention aims to provide means for administering sophisticated customer loyalty programs providing individualised services for each loyalty program member customer.

According to a first aspect of the present invention there is provided an information display system comprising: an information display unit (IDU) for providing pricing information to a customer proximate said information display unit; a customer information input device (CIID) for receiving customer information associated with the proximate customer; and a control system operatively associated with said information display unit and said customer information input device. The control system is adapted to receive the customer information through said customer information input device and display pricing information on said information display based on the customer information.

The system of the present invention permits a retail store to maintain sophisticated customer loyalty programs, defining many levels of membership or participation. For example, the store may assign a customer identification number to each customer participating in the loyalty program. While browsing, a participating customer causes a proximate CIID to receive their individual customer information, including at least their customer identification number, and, subsequently, the nearby EDU(s) change from displaying default information to reflect individualised pricing and promotional information.

Preferably, the information display system audibly or visually alerts a browsing customer to the updated information. If a browsing customer provides no information to a proximate CIID, then the nearby, associated information display unit(s) continue displaying default or general product and pricing information.

The system of the present invention may advantageously comprise shopping carts adapted to receive individual customer information and subsequently transfer this information to a proximate CIID, The shopping cart may additionally further transfer this information directly to an adapted checkout system. In this manner, the shopping cart provides a convenient mechanism for automatically changing the IDU's and transferring individual customer information to the checkout system.

The checkout system can use the transferred customer information, in co-operation with the control system, to determine loyalty program pricing discounts, and, preferably, to determine payment means (e.g., credit information).

According to a second aspect of the present invention there is provided a shopping cart adapted to communicate customer information associated with a customer operating said shopping cart to a store information display system, the cart further adapted to communicate the customer information to a checkout system during a transaction to allow the checkout system to apply special discounts and promotional offers to the transaction for which the individual customer is eligible as determined based on the customer information and to automatically charge a credit account associated with the customer information for a cost of the transaction. Said shopping cart comprises an information input device adapted to permit the customer to enter the customer information and a wireless transmitter adapted to communicate the customer information to the store information display system and to the checkout system.

The cart is preferably adapted to communicate with a customer information receiver (CIR) mounted proximate to a checkout system. The checkout system can then be operatively associated with the CIR and automatically receive customer information transmitted by the shopping cart as the customer approaches the checkout system. The checkout system can automatically apply any special discounts or promotional offers based on the customer information received from the shopping cart through the checkout system's associated CIR. Optionally, payment information may also be associated with the customer information, allowing the checkout system to automatically charge the transaction cost to a customer's credit or other payment account.

Various embodiments of the present invention will now be described by way of example only with reference to the accompanying figures of which:
Figure 1 is a simplified block diagram depicting the system of the present invention;
**Figure 2A** is a block diagram of the customer information input device, shopping cart, and customer-carried transmitter in the preferred embodiment of the present invention;
**Figure 2B** is a block diagram of the customer information input device, shopping cart, and customer-carried information card in an alternate embodiment of the present invention;
**Figure 2C** is a block diagram of the customer information input device, and customer-carried transmitter in an alternate embodiment of the present invention;
**Figure 2D** is a block diagram of the customer information input device and information card carried by a customer in an alternate embodiment of the present invention;
**Figure 2E** is a block diagram of the customer information input device with a keypad in an alternate embodiment of the present invention;
**Figure 3A** is a block diagram of the shopping cart and checkout system in the preferred embodiment of the present invention;
**Figure 3B** is a block diagram of the customer-carried transmitter and checkout system in the preferred embodiment of the present invention;
**Figure 4** is a simplified block diagram illustrating the system of the present invention in its preferred embodiment;
**Figure 5** is a simplified logic flow diagram of the operating logic for displaying providing individualised pricing information; and
**Figure 6** is a simplified logic flow diagram of the operating logic for applying individualised customer information during checkout.

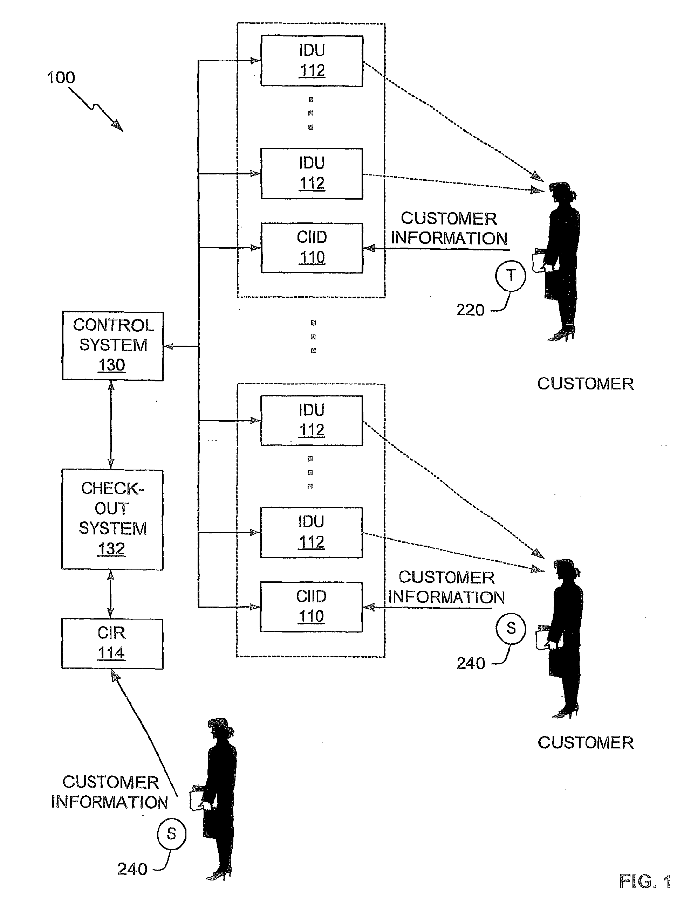

Figure 1 broadly illustrates the present invention. The information display system 100 provides individualised display pricing and advertising information to one or more customers. In a retail environment, one or more information display units (IDUs) 112, together with an associated customer information input device (CIID) 110 are mounted proximate to a given product or group of products. The preferred embodiment of the present invention provides a plurality of CIIDs 110, with each CIID 110 associated with one or more information display units 112. In a default state of operation, a control system 130 causes each IDU 112 to display default product information relevant to nearby products. Since each IDU 112 displays product information related to nearby products, browsing customers are able to easily correlate display information, including pricing, with corresponding products. In this manner, a general customer may browse the various product displays and receive default, or generalised, product and price information from the various IDUs 112 distributed throughout the store.

To foster customer loyalty, the store may offer price discounts or special promotional offers on a varying mix of products to those customers having membership in a store-run loyalty program. To denote loyalty program membership, the store records customer information specific to each member customer, comprising at least a customer identifier. The system provides individualised product information, including loyalty program-based price discounts, to member customers while browsing product aisles and at the check out.

A member customer proximate to a particular CIID 110 transfers their customer information into that CIID 110. The customer information may be input to the CIID 110 automatically, or may require manual input by the member customer. Once a particular CIID 110 receives member customer information, it transfers this information back to the control system 130. In the preferred embodiment, member customer information received through the particular CIID 110 includes customer indicia uniquely identifying the individual customer member. Using this identifying customer information, the control system accesses additional information for the member customer in an associated database. The associated database may include detailed product purchasing histories for the member customer, with such histories automatically developed in co-operation with an adapted checkout system 132. The associated database may further include product preferences for the member customer, and preferably, includes credit information supporting automated transaction processing.

Based on the customer information received through the particular CIID 110, the control system 130 develops and transmits updated pricing and product information for each of the IDUs 112 associated with the particular CIID 110. Preferably, the proximate member customer is alerted to the presence of updated discount pricing audibly or visually. In this manner, the store may conveniently maintain any number of loyalty program price discount levels and promotional offers, keyed to a member customer's particular standing within the loyalty program. After a defined period of time, or after the member customer leaves the area immediately proximate to the particular CIID 110, its associated IDUs 112 return to displaying default product information.

The preferred embodiment of the present invention imparts these same customer-specific pricing and promotional advantages to a checkout system 132 adapted to receive customer information through a proximate customer information receiver (CIR) 114. The CIR 114 may be implemented using the same technology as CIIDs 110, or may be based on a different technology. In the preferred embodiment, the member customer information includes identifying customer indicia and the checkout system 132 transfers this information to the control system 130. The control system 130 accesses the associated database described above to obtain credit information corresponding to the member customer information it received from the checkout system 132.

The control system 130 transfers the stored credit information, along with any loyalty program information to the checkout system 132. This permits the checkout system 132 to automatically apply loyalty program price discounts to eligible products based on an individual customer's level of loyalty program membership, and to automatically secure payment for the purchase transaction based on the member customer's credit information. For enhanced security, the checkout system 132 in the preferred embodiment requires the member customer to input a PIN or other supplemental identifying information. The checkout system 132 then verifies the member customer 's credit information and PIN with an outside authorising network. Note that customer information received through a given CIID 110 or the checkout system CIR 114 may simply receive identifying customer indicia, as in the preferred embodiment, or may include additional information, including credit information, purchasing history, and product preferences.

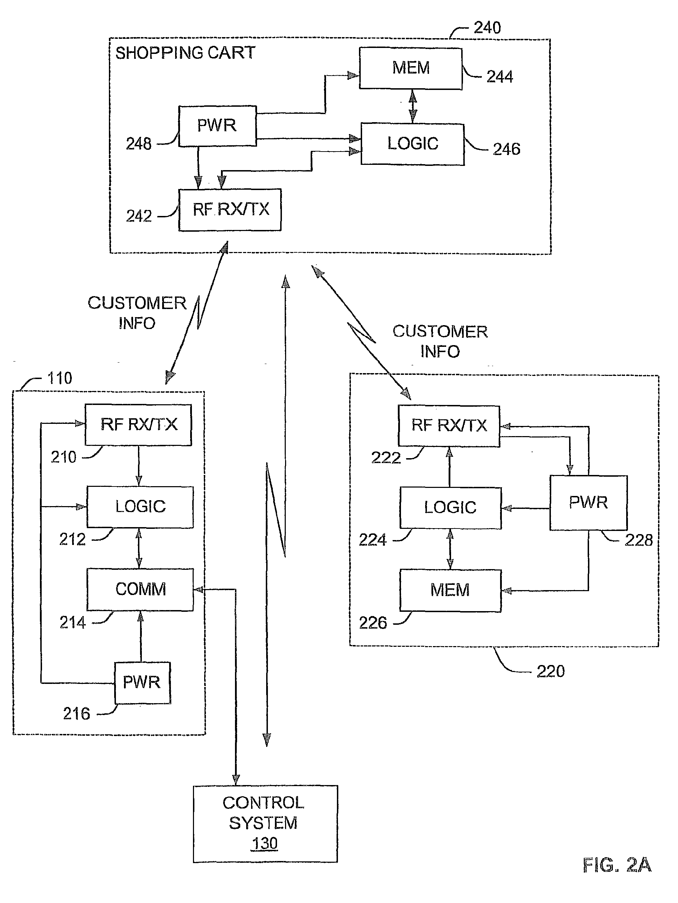

Figure 2A illustrates a preferred embodiment employing CIIDs 110, a shopping cart 240, and a customer-carried transmitter (RF transponder) 220. A store assigns a customer-carried transmitter 220 to each member customer. The customer-carried transmitter 220 contains individual customer information related to the member customer to whom it is assigned. In the preferred embodiment, the information display system 100 includes shopping carts 240 adapted to receive and store customer information from the customer-carried transmitter 220 and subsequently transmit its stored customer information to a proximate CIID 110 or directly to the control system 130.

In the preferred embodiment, the shopping cart 240 includes a logic element 246 for controlling radio reception and transmission through an RF transceiver 242, and for writing and reading customer information to and from a non-volatile memory element 244. A power supply 248 provides operating power to the foregoing shopping cart electronics.
In the preferred embodiment, the customer-carried transmitter 220 does not include an internal battery or other self-contained power source, instead its operating power is derived from an interrogation signal emitted by the shopping cart 240 or by the CIID 110 or CIR 114. A RF transceiver 222 in the transmitter 220 transfers the interrogation signal emitted by the shopping cart 240 to a power converter 228. Power converter 228 stores a portion of the energy received in the interrogation signal and uses this stored energy to power the remaining transmitter 220 electronics. With power from the power converter 228, a logic element 224 reads stored customer information from a non-volatile memory element 226, which also receives operating power from the power converter 228. The logic element 224 transfers this stored customer information to the RF transceiver 222, where it is transmitted to the shopping cart 240. The logic element 246 receives the customer information transmitted by the customer-carried transmitter 220 through the RF transceiver 242. The logic element 246 writes the received customer information to the memory element 244. The logic element 246 is programmed to periodically transmit the customer information so that a browsing member customer has their customer information automatically transferred to a proximate CIID 110. Alternatively, a proximate CIID 110 can periodically emit an interrogation signal, causing the shopping cart 240 or customer-carried transmitter 220 to respond by transmitting the customer information.

The transmit range for both the customer transmitter 220 and the shopping cart 240 is restricted, thus avoiding unintended communication with CIIDs 110 outside the member customer's immediate location. The proximate CIID 110 receives customer information through a RF transceiver 210 under control of a logic element 212. The logic element 212 receives the customer information and formats it for transfer to a communications interface 214. A power supply 216 provides operating power for the CIID 110. The communications interface is in wired communications with the control system 130.

The customer information received from the shopping cart 240 through the proximate CIID 110 is transferred back to the control system 130, along with identifying information for the CIID 110. The control system 130 can thus identify the customer associated with the received customer information and also the CIID 110 through which the customer information was received This enables the control system 130 to determine which IDU(s) 112 to update with individualised customer-specific pricing and promotional information.

By designing the customer-carried transmitter 220 as a passive RF transponder, maintenance issues are avoided in terms of not having to replace transmitter batteries. In contrast, the shopping cart 240 easily carries a power source, such as a rechargeable battery, suitable for interrogating customer transmitters 220 and subsequently transmitting the information at timed intervals while the member customer is browsing the product displays. Conventional holding racks for shopping carts may be adapted to provide automatic battery recharging for the shopping cart of the present invention.

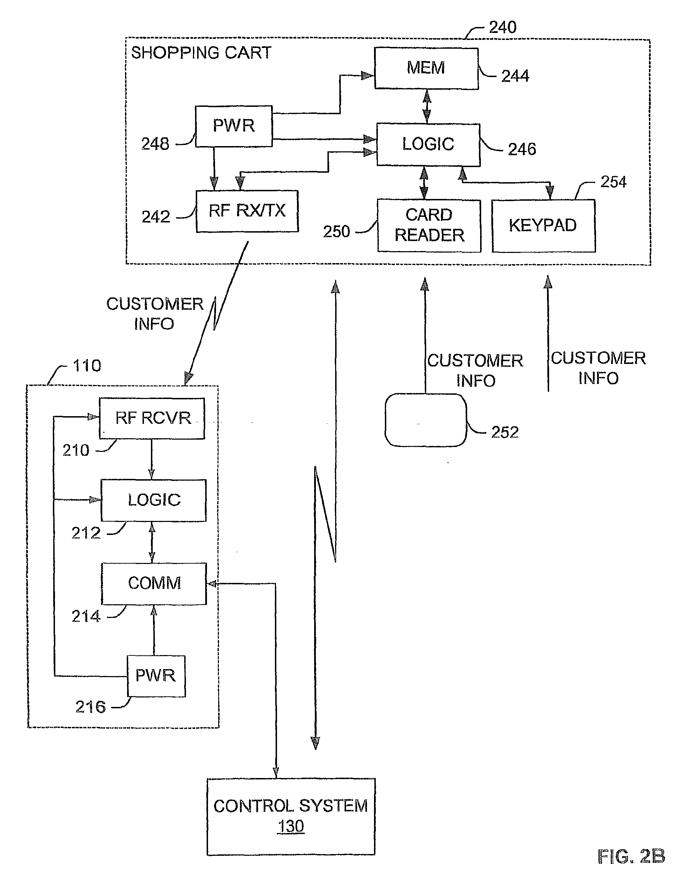

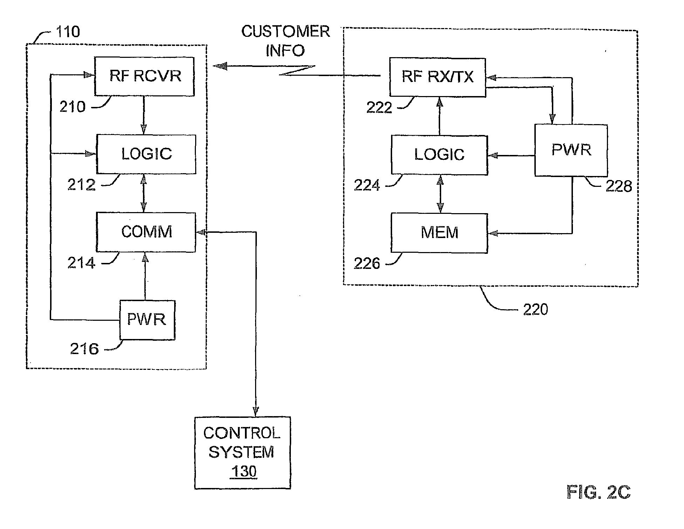

Figure 2B depicts an alternative shopping cart 240. Here a customer-carried card 252 replaces the customer-carried transmitter 220. The card 252 may be magnetic, optical, or electronic, and the shopping cart 240 includes a compatible card reader 250. Examples of the possible card technologies which may be employed include magnetic stripe types, optical indicia types, and electronic or "smart card" types. A member customer swipes or otherwise causes their card 252 to transfer its information into the shopping cart 240 card via the card reader 250. Once customer information is received through the card reader 250, the shopping cart 240 behaves as described above.
An alternate embodiment for the customer-carried transmitter is shown in Figure 2C. In this embodiment the customer-carried transmitter 220 is an active RF transponder operating under its own power. With an internal battery, a customer-carried transmitter can transmit to either CIIDs 110 or CIR 114 without need for an interrogation signal.

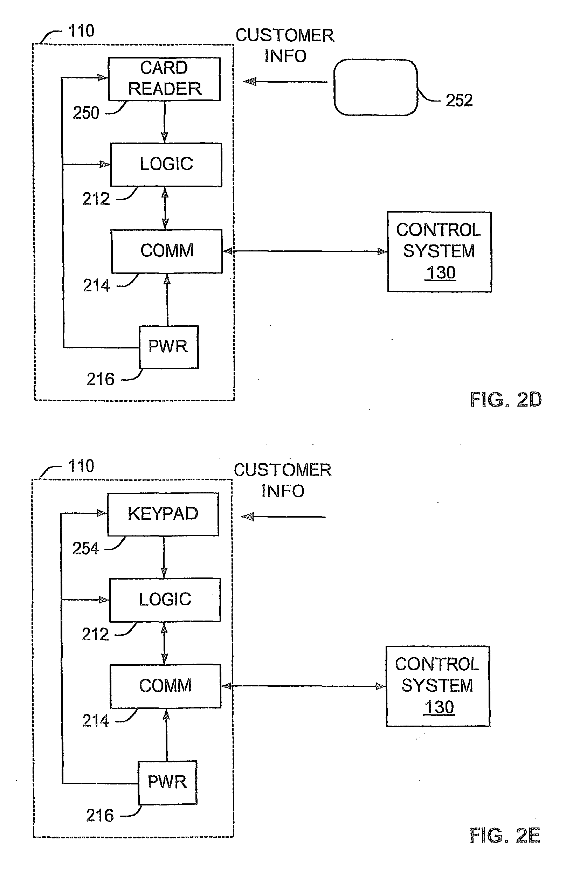

Figure 2D depicts an alternate embodiment in which the CIIDs 110 include a card reader adapted to receive customer information from a compatible customer-carried card 252. Again, the card 252 can be any suitable magnetic, optical, or electronic card. Figure 2E illustrates yet another embodiment of the present invention. In this embodiment, each CIID 110 includes a keypad 254. Using the keypad 254, a member customer enters customer information (typically identifying indicia) directly into a given CIID 110. Once the given CIID 110 receives the customer information through the keypad, this information is transferred to the control system 130 and subsequent operation is identical to the other embodiments described above.

Note that the embodiments described above and shown in Figure 2A - 2E are simply a few of the many variations available for transferring customer information from a browsing member customer into one or more CIIDs 110. For example, the information display system 100 of the present invention may include both passive and active RF transponders serving as customer-carried transmitters 220. Both the shopping carts 240 and the CIIDs 110 can then be adapted to interrogate passive versions of the transmitter 220. This permits those member customers carrying passive transmitters 220 to transfer their information into a proximate CIID 110, either through a shopping cart 240 or directly from their passive transmitter 220. For those customers with active transmitters 220, both the shopping carts 240 and the CIIDs 110 are capable of receiving customer information directly.

In another embodiment of the present invention, an individual customer enters their customer information into the shopping cart 240 via customer-carried transmitter 220, customer card 252, or keypad 254. The shopping cart 240 stores this information in its memory. Optionally, the customer enters credit or payment information into the shopping cart 240 as well. The shopping cart 240 communicates directly with the control system 130 via wireless signal to determine the loyalty program membership level of the customer. The control system 130 transmits loyalty program information back to the shopping cart 240. Alternatively the control system 130transmits payment or credit information back to the shopping cart 240, if the customer has configured their loyalty program account to include such information. Subsequently, as the customer approaches a proximate IDU 112, the shopping cart 240 transmits the customer information, including the loyalty membership level to the CIID 110 associated with the proximate IDU 112. In response, the information shown on the IDU 112, either pricing or advertising, or both, is updated in response to receiving the customer loyalty information.

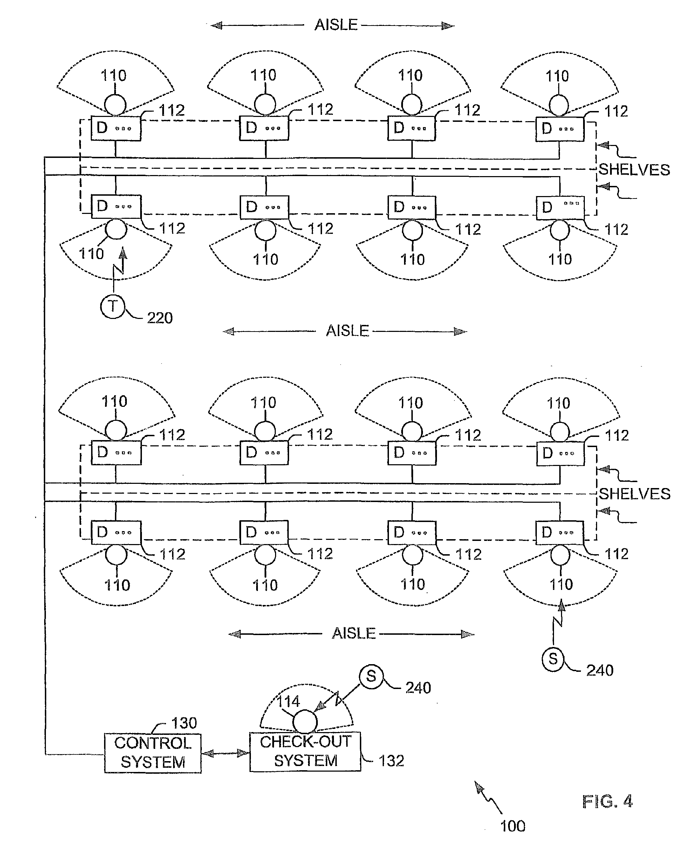

Figure 4 illustrates the system 100 of the present invention with a plurality of IDUs 112 distributed throughout the retail environment. Note that each IDU 112 block in the diagram is associated with a proximate CIID 110 and can comprise an individual IDU or several separate IDUs. The control system 130 is programmed with information related to the physical layout of the various IDUs 112 and CIIDs 110 and therefore has knowledge regarding which IDUs 112 are associated with which CIIDs 110.

As a browsing customer carrying a transmitter 220 enters the reception range of the given CIID 110, indicated by the dotted fan shapes associated with each CIID, customer information is received by the given CIID 110 via a wireless signal from the transmitter 220. The customer-carried transmitter 220 transmits the information actively, or in response to an interrogation signal emitted from the CIID 110. The control system 130 receives this customer information from the given CIID 110 and accesses loyalty program information for the individual customer from an associated database. In addition, the control system 130 may additionally access purchasing history information or product preference information from the database.

The control system 130 uses the stored database information associated with the individual customer's information to develop individualised product pricing information and, optionally, individually targeted product or promotional advertising. This individualised pricing and product information is then sent by the control system 130 to the IDU 112 or IDUs 112 associated with the CIID 110 through which the customer information was received.

Figure 4 also illustrates the transfer of a given customer's customer information from a shopping cart 240 into a given CIID 110. The shopping cart 240 is specifically adapted to receive and transmit an individual customer's customer information, as described below. Again, a browsing customer, having already transferred their customer information into the shopping cart 240, approaches a given CIID 110 with their shopping cart 240 and has their customer information automatically transferred from the shopping cart 240 to the CIID 110. As with the customer-carried transmitter 220, their customer information is used by the control system 130 to provide individual pricing and product information on the IDUs 112 associated with the given CIID 110.

Figure 4 additionally illustrates the automatic transfer of customer information for an individual customer at a checkout system 132. The checkout system 132 co-operates with a proximate CIR 114 to receive customer information either from a given customer's shopping cart 240, or a given customer's transmitter 220. The CIR 114 may be similar or identical to the CIIDs 110. The shopping cart 240 and the customer-carried transmitter 220 may be adapted to transfer different information to the CIR 114 of the checkout system 132 as compared to the information transmitted to a given CIID 110. For example, if the customer has elected to have credit information or payment information stored in association with their customer information, the credit portion of the customer information may be transmitted only to the CIR 114 at the checkout system 132.

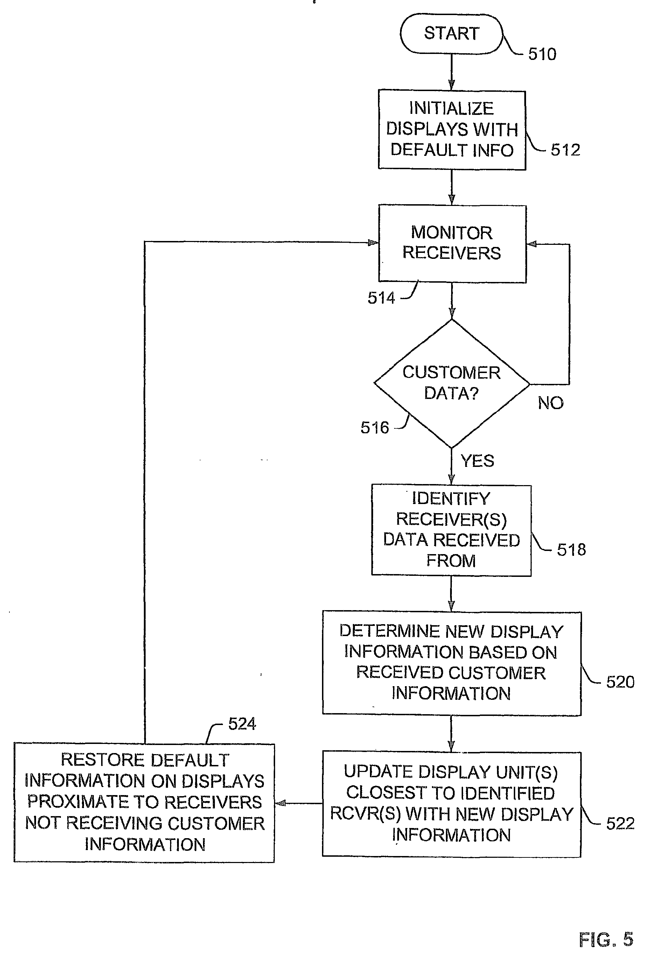

Figure 5 illustrates simplified, general operation of the information display system 100. Operations begin (block 510) with the control system 130 initialising the individual IDUs 112 with default pricing and product information (block 512). For a given IDU 112, this default information includes general, or default, prices for the product or products proximate the given IDU 112. The control system 130 monitors the various CIIDs 110 (block 514) to determine if one or more CIIDs 110 has received customer information from one or more browsing customers (block 516). The control system 130 maintains default display information on the various IDUS 112 until one or more CIIDs 110 receive customer information. The control system 130 then identifies the specific CIIDs 110 through which the customer information was received (block 518) and determines new display information based on the received customer information, with the new display information determined in dependence on the customer for which customer information was received (block 520).

The control system 130 transmits the new pricing and product information to the IDU(s) 112 associated with each CIID 110 through which customer information was received (522). In this manner, one or more browsing customers receive individualised pricing and product information on the IDUs 112 proximate to CIID 110 closest to each of the browsing customers. All of the IDUs 112 associated with CIIDs 110 through which no customer information was received are restored to a default display (block 524).

Restoring default information to a given IDU 112 that is currently displaying individualised pricing and product information may occur automatically after a defined time-out interval, or may occur after a proximate member customer leaves a defined area around a CIID 110.

In general, the information display system of the present invention includes implementation flexibility. Those skilled in the art will readily appreciate the various means available for interconnecting the distributed CIIDs 110 and IDUs 112 with the control system 130 and checkout system 132. Indeed, the specific mechanism by which the various CIIDs 110 and various IDUs 112 communicate with the control system 130 is not critical to the present invention. Although wired in direct electronic communication in the preferred embodiment, the CIIDs 110, IDUs 112, and control system 130 may be in wired electrical, direct or through-the-air optical, or wireless electromagnetic communications, or may communicate using any mix of these technologies.

The shopping carts 240 provide further flexibility in that the control system 130 and shopping carts 240 may communicate directly via wireless signal. With such direct communications, the amount of information exchanged between the CIIDs 110 and control system 130 could be reduced, as the control system 130 could communicate loyalty program standing and credit information for a given customer directly to the shopping cart 240. The shopping cart 240 could then transmit loyalty program information directly to a CIID 110, which could then co-operate with its associated IDUs 112 to display updated pricing and advertising information.

Those skilled in the art will readily appreciate the many variations possible for implementing a system that permits a given customer to input identifying customer information into a given CIID 110, for subsequent transfer to a central control system 130.

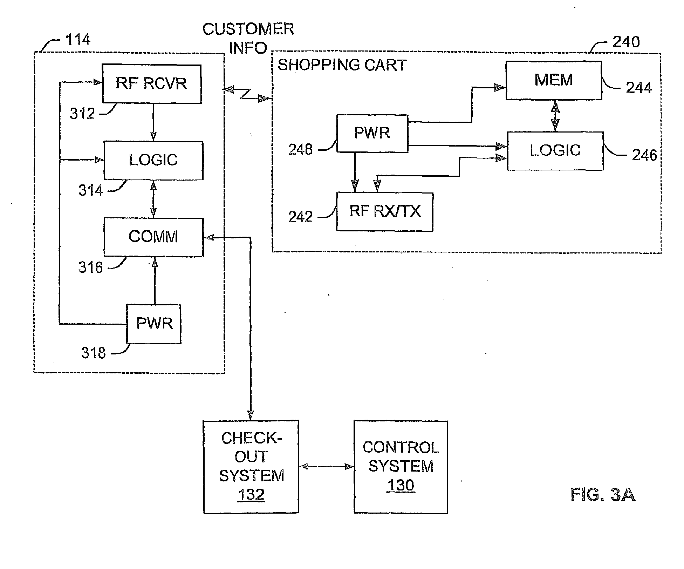

Referring now to Figure 3A, a given member customer's information is automatically transferred from a given shopping cart 240 into the checkout system 132 through a dedicated CIR 114 mounted in close proximity to the checkout system 132. In operation, as a member customer approaches the checkout system 132 with a given shopping cart 240 and their customer information is transmitted from the cart 240 into the checkout system 132 through CIR 114.

The customer information received through CIR 114 includes identifying customer indicia.. The control system 130 accesses an associated database based on the customer information received from the checkout system 132. Member customer information stored in the associated database corresponding to the identifying customer indicia preferably includes loyalty program membership information, product preference information, and credit information. The control system retrieves this stored information and transfers it to the checkout system 132.

Using the information received from the control system 130, the checkout system 132 automatically applies any product discounts for which the given member customer is eligible. If stored credit information was received from the control system 130, the checkout system 132 prompts the given member customer to enter a PIN or other supplemental identifier and then contacts an outside authorising network for payment authorisation.

In order to provide the information display system 100 with additional information regarding product preferences for a given member customer, the checkout system transfers product information, based on product scanning, during the checkout operation to the control system for storage in the associated database. In this manner, the control system 130, in co-operation with the checkout system 132, develops detailed purchasing histories for each member customer. Such histories are useful for example, to display targeted advertising on the various IDUs 112 for a given member customer.

Operation in accordance with the above description offers significant savings in time and enhanced customer service. Because the loyalty information automatically received or accessed at the checkout system 132 for a given customer can include substantial detail, the store may offer various levels of product price discounts targeted to the specific member. Moreover, the automatic transfer of customer credit information facilitates transaction information and greatly reduces the amount of time necessary to secure payment from the member customer.

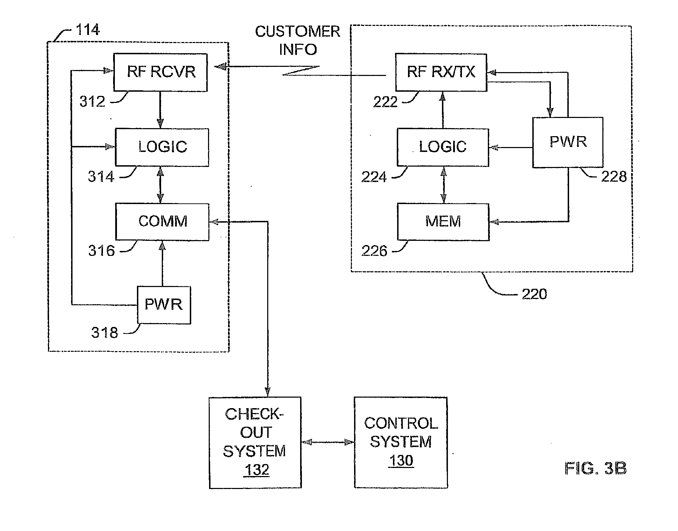

Figure 3B illustrates an alternate embodiment for the present invention wherein the CIR 114 mounted proximate the checkout system 132 is adapted to receive information directly from member customers' transmitters 220. As with the CIIDs 110 mounted proximate various product displays, the CIR 114 is adapted to work with either passive customer-carried transmitters 220 or active customer transmitters 220. In this manner, a given member customer automatically transfers their customer information to the checkout system 132 through CIR 114 without need for the shopping cart 240. Indeed, the CIR 114 of the present invention may receive information directly from a shopping cart 240, from an active transmitter 220, or from a passive transmitter 220.

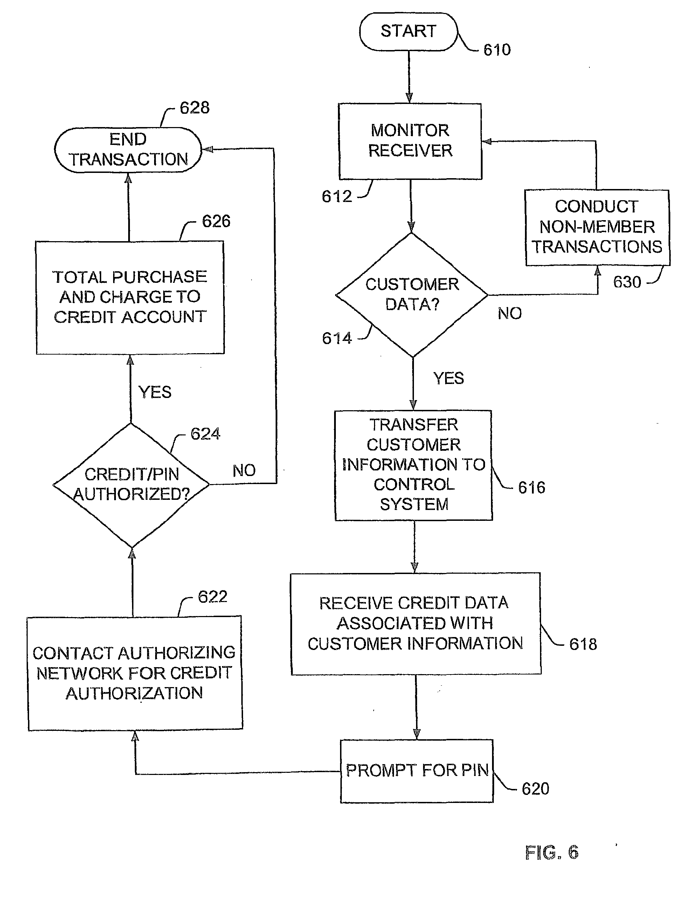

Figure 6 provides simplified operating logic for the checkout system 132 detailed above. Operation begins (block 610) with the checkout system 132 monitoring its proximate CIR 114. If no customer information is received (block 614), the checkout system 132 continues monitoring CIR 114 and is available for other transaction processing (block 630). When customer information is received through CIR 114 (block 614), the checkout system 132 transfers this customer information to the control system 132 (block 616). The control system 130 accesses an associated database to obtain stored loyalty benefit and, preferably, credit information corresponding to the customer for which customer information was received. The control system 132 transfers the loyalty benefit and credit information to the checkout system 130 (block 618). The checkout system 132 prompts the customer for secondary identifying information, such as a PIN, to minimise fraudulent checkout (block 620). The checkout system 132 then contacts an outside credit authorisation network to obtain transaction authorisation (block 622). If credit authorisation is obtained (block 624), the checkout system 132 totals the purchase cost and charges this amount to the customer's credit account (block 626) and operation ends (block 628). If credit authorisation is not obtained (block 624), the checkout system ends the credit transaction (block 628).

Automatically transferring individual customer information to the checkout system provides tremendous advantages to the individualised customer loyalty program system of the present invention. Further, automatically -associating customer credit information in association with customer information received from a shopping cart 240 or customer-carried transmitter 220 can greatly speed up the checkout transaction itself. Indeed, with the automatic transfer of customer information associated with loyalty program and payment information, the system of the present invention can significantly reduce the time required for the checkout transaction.

As for loyalty program sophistication, the control system 130, in co-operation with the checkout system 132, can store detailed purchase records for each individual customer. As noted, this information permits the individualised customer loyalty program system to automatically update various aspects of an individual customer's loyalty membership standing.

The system of the present invention may track the length of time a given customer has maintained membership in the loyalty program and automatically elevate the membership level after a given length of membership, thereby providing enhanced price discounts and promotional offer eligibility to that customer. Further, using product purchase information, the system of the present invention can develop advertising and promotional information tailored to each loyalty program member customer.

Those skilled in the art will realise there are many alternatives to the embodiments described above, which alternatives are within the scope of the present invention as defined by the appended claims.

## Claims

1. An information display system (100) comprising an information display unit (112) for providing pricing information to a customer proximate said information display unit (112) and characterised in further comprising: a customer information input device (110) for receiving customer information associated with the proximate customer; and a control system (130) operatively associated with said information display unit and said customer information input device and adapted to receive the customer information through said customer information input device and display pricing information on said information display based on the customer information.

2. The system of claim 1 wherein said control system (130) is further adapted to display default pricing information on said information display unit (112) before receiving the customer information and to display changed pricing information on said information display unit in response to receiving the customer information.

3. The system of claim 2 wherein said control system (130) is further adapted to revert from displaying the changed pricing information on said information display unit back to displaying the default pricing information on said information display unit after a defined interval of time.

4. The system of claim 1, 2 or 3 wherein the pricing information is based on a loyalty benefit associated with the proximate customer.

5. The system of claim 4 wherein the pricing information is based on the loyalty benefit, with the loyalty benefit corresponding to one of a multiple number of loyalty program membership levels, each level having different discount eligibility.

6. The system of claim 4 or 5 wherein said control system receives the loyalty benefit as a part of the customer information received through said customer information input device (110).

7. The system of claim 4 or 5 wherein said control system reads the loyalty benefit from an associated database based on the customer information received through said customer information input device.

8. The system of any preceding claim wherein said control system is further adapted to display default pricing information on said information display unit (112) before receiving the customer information and to display individualise advertising information on said information display unit in response to receiving the customer information.

9. The system of any preceding claim wherein said control system (130) is further adapted to display default advertising information on said information display unit (112) before receiving the customer information and to display changed advertising information on said information display in response to receiving the customer information through said customer information input device.

10. The system of claim 8 or 9 wherein the changed advertising information is based on a purchasing profile associated with the proximate customer.

11. The system of claim 10 wherein said control system receives the purchasing profile as a part of the customer information received through said customer information input device (110).

12. The system of claim 10 wherein said control system reads the purchasing profile from an associated database based on the customer information received through said customer information input device.

13. The system of any preceding claim comprising a plurality of information display units (112) each proximate to a product or service display area.

14. The system of any preceding claim wherein said information display unit is mounted to a product shelf

15. The system of any preceding claim wherein said customer information input device is proximate to said information display.

16. The system of any preceding claim wherein said customer information input device includes a wireless receiver (210) for receiving a wireless signal containing the customer information from a customer-carried transmitter (220).

17. The system of any preceding claim further comprising a shopping cart (240) including:
a cart-mounted customer information input device (254) for receiving the customer information; and
a cart-mounted transmitter (242) for transmitting the customer information received through said cart-mounted customer information input device, said shopping cart being adapted to first receive the customer information through said cart-mounted customer information input device and then subsequently transmit the customer information to other said customer information input device (110).

18. The system of claim 17 further comprising a cart-mounted power source (248) for powering said cart-mounted customer information input device and said cart-mounted transmitter.

19. The system of claim 17 or 18 wherein said cart-mounted customer information input device includes a wireless transceiver (242) for receiving a wireless signal containing the customer information from a customer-carried transmitter.

20. The system of claim 17 or 18 wherein said cart-mounted customer information input device includes a card reader (250) adapted for reading the customer information from a customer-carried card (252).

21. The system of claim 17, 18, 19 or 20 wherein said control system is adapted to transmit customer loyalty and credit information to said shopping cart (240) in response to receiving a wireless signal containing customer indicia from said shopping cart.

22. The system of any one of claims 1 to 15, 17 or 18 wherein said customer information input device includes a keypad for inputting customer information.

23. The of any preceding claim wherein said information display unit is further adapted to provide an audible alert when the changed information is received from said control system.

24. The system of any preceding claim wherein said information display unit is further adapted to provide a visual alert when the changed information is received from said control system.

25. The system of claim 16 or 19 wherein said wireless receiver in said customer information input device is a transceiver and emits an interrogation signal used to supply power to said customer-carried transmitter and said customer-carried transmitter is a passive RF transponder.

26. The system of claim 16 or 19 wherein said customer-carried transmitter is an active RF transponder adapted to transmit a wireless signal containing the customer information to said wireless transceiver in said customer information input device without need for first receiving an interrogation signal.

27. The system of any one of claims 16 to 26 wherein said control system (130) is further adapted to display default pricing information on said information display unit (112) before the customer-carried, or cart mounted, transmitter (220, 240)enters a defined reception range of said customer information input device (110) and to display changed pricing information on said information display when the customer-carried transmitter enters the defined reception range of said customer information input device.

28. The system of claim 27 wherein said control system is further adapted to revert from displaying the changed pricing information on said information display unit back to displaying the default pricing information on said information display unit after the customer-carried transmitter is removed from the defined reception range of said customer information input device.

29. A shopping cart (240) for a system as claimed in any proceeding claim.

30. A cart (240) as claimed in claim 29 adapted to communicate customer information associated with a customer operating said shopping cart to a store information display system (100) and further adapted to communicate the customer information to a checkout (132) system during a transaction to allow the checkout system to apply special discounts and promotional offers to the transaction for which the individual customer is eligible as determined based on the customer information and to automatically charge a credit account associated with the customer information for a cost of the transaction, said shopping cart comprising:
an information input device (242, 250, 254) adapted to permit the customer to enter the customer information; and
a wireless transmitter (242) adapted to communicate the customer information to the store information display system (130) and to the checkout system (132).

31. The cart of claim 30 or 31 further adapted to receive credit information from the control system (130) in response to said shopping cart (240) sending the customer information to the control system.

32. The shopping cart of claim 31 wherein said shopping cart (240) is adapted to automatically transmit the credit information to a customer information receiver (114) operatively associated with the checkout system (132) during a checkout transaction and, in response, the checkout system is adapted to automatically charge a cost associated with the transaction to a customer account associated with the credit information.

33. The shopping cart of claim 29, 30, 31 or 32 wherein said shopping cart (240) is adapted to automatically transmit loyalty program information to a customer information receiver operatively associated with the checkout system (132) during a checkout transaction and, in response, the checkout system is adapted to automatically apply a loyalty benefit associated with the loyalty program information to the transaction.

34. The shopping cart (240) of any one of claims 29 to 33 wherein the customer information received through said information input device includes a customer indicia uniquely associated with the customer and said shopping cart transmits the customer indicia to a customer information receiver associated with the checkout system.

35. The shopping cart of claim 34 wherein the checkout system (132) is adapted to receive the customer indicia from the associated customer information receiver (114) and automatically apply stored loyalty benefits associated with the customer indicia.

36. The shopping cart of claim 34 wherein the checkout system (132) is adapted to receive the customer indicia from the associated customer information receiver (114) and automatically assesses a charge for the transaction against a credit account associated with the customer indicia.

37. The shopping cart of any one of claims 29 to 36 further comprising a battery (248), to provide operating power to said information input device and said wireless transmitter, and a charging adapter adapted to automatically make electrical contact with a shopping cart storage rack for the purpose of automatically recharging said shopping cart while not in use.
